# EUROPÄISCHE PATENTSCHRIFT

(11) **EP 3 423 639 B1**
(45) Veröffentlichungstag und Bekanntmachung des Hinweises auf die Patenterteilung: **21.10.2020**
(21) Anmeldenummer: 17708726.9
(22) Anmeldetag: 28.02.2017
(51) Int. Cl.: E02D 27/42

(54) **GRÜNDUNGSPFAHL FÜR EINE WINDENERGIEANLAGE**
FOUNDATION PILE FOR A WIND MOTOR
PIEU DE FONDATION POUR UNE ÉOLIÈNNE

(30) Priorität: 29.02.2016 DE 102016203267
(43) Veröffentlichungstag der Anmeldung: 09.01.2019
(73) Patentinhaber: innogy SE, 45128 Essen (DE)
(72) Erfinder: MATLOCK, Benjamin, 20259 Hamburg (DE)
(74) Vertreter: Richly & Ritschel Patentanwälte PartG mbB
(86) Internationale Anmeldenummer: PCT/EP2017/054666
(87) Internationale Veröffentlichungsnummer: WO 2017/148961

(56) Entgegenhaltungen:
- JP-A- S57 119 019

## Beschreibung

Die vorliegende Erfindung betrifft einen Gründungspfahl, der insbesondere zum Aufnehmen einer Windenergieanlage ausgebildet ist.

Gründungspfähle werden üblicherweise aus zylindrischen übereinander angeordneten und miteinander verbundenen Gründungspfahlsegmenten errichtet, so wie das in der Druckschrift US 2015/0376857 A gelehrt wird. Die Gründungspfahlsegmente wiederum werden aus einem, zwei oder mehr jeweils aus einer gebogenen Stahlplatte hergestellten Teilzylindersegmenten zusammengesetzt.

Wenn ein Gründungspfahlsegment aus lediglich einem einzigen Teilzylindersegment hergestellt wird, wird die Stahlplatte derart entlang ihrer Längenerstreckung gebogen, dass die sich im gebogenen Zustand gegenüberstehenden Längskanten (Material- bzw. Blechkanten) miteinander verschweißt werden können. Die Verschweißung der sich gegenüberstehenden Längskanten erfolgt mittels einer Längsschweißnaht.

Wenn ein Gründungspfahlsegment aus zwei oder mehr Teilzylindersegmenten hergestellt wird, werden die Teilzylindersegmente jeweils an den Längskanten miteinander mittels Längsschweißnähten verbunden. Dabei ist zum Verbinden der Teilzylindersegmente eine der Anzahl der Teilzylindersegmente entsprechende Anzahl von Längsschweißnähten notwendig.

Der Gründungspfahl wird anschließend aus einer Vielzahl von entsprechend gebildeten Gründungspfahlsegmenten zusammengebaut, indem aneinander grenzende Gründungspfahlsegmente mittels jeweils einer Rundschweißnaht so verbunden werden, dass die jeweiligen Längsachsen der Gründungspfahlsegmente kollinear zueinander verlaufen.

Zur Herstellung eines entsprechenden Gründungspfahls sind folglich viele Schweißnähte mit einer großen Gesamtlänge notwendig, wodurch sich die Herstellung des Gründungspfahls aufwendig und kostenintensiv gestaltet. So sind z.B. zur Herstellung von zwei Gründungspfahlsegmenten, die jeweils eine Höhe von 3 m und einen Durchmesser von 7 m aufweisen, und zu deren Verbindung Schweißnähte mit einer Gesamtlänge von 28 m notwendig, nämlich zweimal jeweils 3 m Längsschweißnaht zur Verbindung der sich gegenüberstehenden Seitenkanten bzw. Materialkanten der einzelnen Teilzylindersegmente und 22 m Rundschweißnaht zur Verbindung der zwei Gründungspfahlsegmente.

Bei Gründungspfählen, die im Meeresuntergrund verankert werden, sind mittlerweile Durchmesser von 7 m (sieben Meter) und mehr üblich oder gewünscht. Damit ein Gründungspfahl eine ausreichende Stabilität aufweist, um auf diesen durch Wind- und Wasserbewegungen ausgeübten Kräften standzuhalten, muss die Wandstärke des Gründungspfahls vergrößert werden. Hinzu kommt noch die Problematik, dass umso größer der Durchmesser eines Gründungspfahls ist, desto weniger wirkt sich eine Vergrößerung der Wandstärke auf dessen Stabilität aus. Folglich müssen bei Gründungspfählen mit immer größer werdenden Durchmessern die Wandstärken überproportional zu deren Durchmesser anwachsen.

Große Wandstärken führen jedoch zu einem erheblichen Mehraufwand und zu erheblichen Mehrkosten bei der Herstellung eines Gründungspfahls. Das Biegen einer Stahlplatte zu einem Teilzylindersegment wird mit größer werdender Wandstärke immer aufwendiger. Ferner wird das Zusammenschweißen von Teilzylindersegmenten zu einem Gründungspfahlsegment und das Zusammenschweißen der Gründungspfahlsegmente zu einem Gründungspfahl mit größer werdender Wandstärke technisch immer aufwendiger und damit auch kostenintensiver.

Der vorliegenden Erfindung liegt die Aufgabe zugrunde, einen Gründungspfahl bereitzustellen, der eine erhöhte Stabilität aufweist und trotz erhöhter Stabilität einfacher und kostengünstiger herzustellen ist.

Die der vorliegenden Erfindung zugrundeliegende Aufgabe wird durch einen Gründungspfahl mit den Merkmalen des Anspruchs 1 gelöst. Vorteilhafte Ausgestaltungen des erfindungsgemäßen Gründungspfahls sind in den abhängigen Ansprüchen beschrieben.

Im Genaueren wird die der vorliegenden Erfindung zugrunde liegende Aufgabe durch einen Gründungspfahl gelöst, der eine Stabilisierungseinrichtung umfasst, die innerhalb des Gründungspfahls angeordnet und mit zumindest zwei Innenflächenabschnitten des Gründungspfahls verbunden ist, wobei mittels der Stabilisierungseinrichtung Druck- und/oder Zugkräfte übertragbar sind, so dass die Stabilisierungseinrichtung einer Lateralverformung und/oder einer Torsionsverformung des Gründungspfahls entgegengewirkt.

Durch die innerhalb des Gründungspfahls angeordnete und mit Innenflächenabschnitten des Gründungspfahls verbundene Stabilisierungseinrichtung werden durch beispielsweise Windeinwirkung, Welleneinwirkung oder Gezeitenstromeinwirkung auf eine Seite des Gründungspfahls ausgebübte Kräfte mittels der Stabilisierungseinrichtung innerhalb der Gründungspfahls verteilt. Somit weist der erfindungsgemäße Gründungspfahl eine erhöhte Lateralsteifigkeit und eine erhöhte Torsionssteifigkeit auf. Daher kann zum Erreichen einer Lateralsteifigkeit (Lateralbiegefestigkeit) und/oder einer Torsionssteifigkeit des erfindungsgemäßen Gründungspfahls dessen Wandstärke erheblich reduziert werden, da bei dem erfindungsgemäßen Gründungspfahl dessen Lateralsteifigkeit und Torsionssteifigkeit mittels der Stabilisierungseinrichtung erheblich vergrößert wird, so dass die Steifigkeit des erfindungsgemäßen Gründungspfahls nicht lediglich nur durch dessen Außengeometrie und dessen Wandstärke bestimmt wird. Aufgrund der geringeren Wandstärke des Gründungspfahls können zu dessen Herstellung Stahlplatten mit einer geringeren Wandstärke verwendet werden, so dass der Aufwand für deren Biegung und für die Verschweißung der Teilzylindersegmente zu Gründungspfahlsegmenten und für die Verschweißung der Gründungspfahlsegmente zum Gründungspfahl erheblich reduziert ist. Daher weist der erfindungsgemäße Gründungspfahl reduzierte Herstellungskosten auf. Ferner weist der erfindungsgemäße Gründungspfahl bedingt durch seine reduzierte Wandstärke ein erheblich reduziertes Gewicht auf, wodurch der Transport der Teilzylindersegmente bzw. der Gründungspfahlsegmente zu dem Aufstellungsort des Gründungspfahls maßgeblich vereinfacht ist.

Unter einer Lateralverformung des Gründungspfahls ist eine Verformung zu verstehen, die quer zu der Längsachse des Gründungspfahls gerichtet ist. Eine Lateralverformung ist durch Lateralkräfte bedingt, die auf den Gründungspfahl ausgeübt werden. Unter Lateralkräften sind auf den Gründungspfahl ausgeübte Kräfte zu verstehen, die eine Wirkrichtungskomponente aufweisen, die senkrecht zu der Längsachse des Gründungspfahls verläuft. Diese Lateralkräfte können durch auf den Gründungspfahl wirkende Winde oder Wasserströmungen bedingt sein.

Da mittels der Stabilisierungseinrichtung Druck- und/oder Zugkräfte übertragbar sind, sind mittels der Stabilisierungseinrichtung von einem ersten Innenflächenabschnitt, der mit der Stabilisierungseinrichtung verbunden ist, auf einen zweiten Innenflächenabschnitt, der ebenfalls mit der Stabilisierungseinrichtung verbunden ist, Druck- und/oder Zugkräfte übertragbar.

Die Stabilisierungseinrichtung kann auch als Stabilisierungsstruktur, Stabilisierungsmittel, Versteifungsstruktur, Druckstrebe, Zugstrebe oder Druck- und/oder Zugstrebe bezeichnet werden.

Die Innenflächenabschnitte des Gründungspfahls sind dabei vorzugsweise einander gegenüberliegend angeordnet. D.h., dass in Draufsicht auf den Gründungspfahl bzw. auf das Gründungspfahlsegment (somit in Draufsicht auf eine Stirnkante des Gründungspfahls bzw. des Gründungspfahlsegments) die Innenflächenabschnitte, mit denen die Stabilisierungseinrichtung verbunden ist, einen Winkelabstand von 180° aufweisen. Jedoch ist es auch möglich, dass die Innenflächenabschnitte einen von 180° unterschiedlichen Winkelabstand zueinander aufweisen, z.B. zwischen 90° und 120°, oder zwischen 120° und 150°, oder zwischen 150° und 180°. Allgemein müssen die Innenflächenabschnitte, mit denen die Stabilisierungseinrichtung verbunden ist, einen Winkelabstand zueinander aufweisen.

Die Stabilisierungseinrichtung ist vorzugsweise aus einem nicht korrodierenden Material, beispielsweise aus Stahl und/oder aus kohlefaserverstärkten Kunststoff gebildet.

Vorzugsweise umfasst die Stabilisierungseinrichtung zumindest einen Stabilisierungsring, der innerhalb des Gründungspfahls angeordnet und mit zumindest zwei Innenflächenabschnitten des Gründungspfahls verbunden ist.

Der Stabilisierungsring weist vorzugsweise eine rechteckförmige Querschnittsgeometrie auf. Weiter vorzugsweise ist der Querschnitt des Stabilisierungsringes T-förmig ausgebildet. Weiter vorzugsweise ist der Querschnitt des Stabilisierungsringes Doppel-T-förmig ausgebildet. Der Stabilisierungsring ist weiter vorzugsweise über dessen gesamten Außenumfang mit einer Innenfläche des Gründungspfahls verbunden. Vorzugsweise ist der Stabilisierungsring mit der Innenfläche des Gründungspfahls verschweißt. Der Stabilisierungsring umspannt vorzugsweise einen Winkel von 360°.

Vorzugsweise umfasst die Stabilisierungseinrichtung zumindest eine Stabilisierungsstrebe, deren zwei Enden mit den zwei Innenflächenabschnitten des Gründungspfahls verbunden sind.

Ein entsprechend ausgebildeter Gründungspfahl ist konstruktiv besonders einfach aufgebaut, so dass auch die Herstellungskosten des entsprechend ausgebildeten Gründungspfahls besonders niedrig sind. Trotz der einfachen Ausbildung der Stabilisierungseinrichtung als Stabilisierungsstrebe weist der Gründungspfahl eine erhöhte Lateralsteifigkeit (Biegefestigkeit) und eine erhöhte Torsionssteifigkeit auf.

Die Stabilisierungsstrebe kann gerade oder mit einer Biegung ausgebildet sein. Mittels einer geraden Stabilisierungsstrebe lassen sich Druck- und/oder Zugkräfte besonders effektiv übertragen. Bei einer eine Biegung aufweisenden Stabilisierungsstrebe kann der Innenraum des Gründungspfahls besonders effektiv genutzt werden, da sich die Stabilisierungsstrebe anderen Bauwerken innerhalb des Gründungspfahls, z.B. einem Aufzug und/oder einer Treppe, anpassen kann. Ferner die Stabilisierungseinrichtung zur Aufnahme und Führung von Kabeln innerhalb des Gründungspfahls verwendet werden.

Die Innenflächenabschnitte des Gründungspfahls, mit denen die Stabilisierungsstrebe verbunden ist, sind vorzugsweise einander gegenüberliegend angeordnet.

Es ist jedoch auch möglich, dass sich die Stabilisierungsstrebe dem Innenradius des Gründungspfahls anschmiegt, folglich zumindest abschnittsweise parallel zu einer Innenwand des Gründungspfahls verläuft.

Vorzugsweise umfasst die Stabilisierungseinrichtung zumindest zwei Stabilisierungsstreben, deren Erstreckungskomponenten zumindest abschnittsweise nicht parallel zueinander verlaufen. Dabei sind die jeweiligen Enden der Stabilisierungsstreben jeweils mit einem Innenflächenabschnitt des Gründungspfahls verbunden.

Ein entsprechend ausgebildeter Gründungspfahl weist eine nochmals erhöhte Lateralsteifigkeit und Torsionssteifigkeit auf. Insbesondere wenn die zwei Stabilisierungsstreben einen Winkel von 90° zueinander aufweisen, können von einer beliebigen Richtung auf den Gründungspfahl ausgeübte Kräfte besonders vorteilhaft innerhalb des Gründungspfahls verteilt werden. Dadurch erhöht sich nochmals die Biegesteifigkeit und die Torsionssteifigkeit des Gründungspfahls.

Die Erstreckungskomponenten der zumindest zwei Stabilisierungsstreben spannen somit eine Ebene auf. Dabei verlaufen die Stabilisierungsstreben vorzugsweise senkrecht zueinander. Es ist aber auch möglich, dass die Stabilisierungsstreben einen beliebigen Winkel miteinander einschließen.

Beispielsweise können die Stabilisierungsstreben jeweils gerade ausgebildet sein. Die Stabilisierungsstreben können aber auch jeweils eine Biegung aufweisen. Insbesondere können sich die Stabilisierungsstreben der Innenwand/dem Innenradius des Gründungspfahls anschmiegt.

Vorzugsweise umfasst die Stabilisierungseinrichtung zumindest drei Stabilisierungsstreben, deren Erstreckungskomponenten jeweils paarweise nicht parallel zueinander verlaufen. Die jeweiligen Enden der Stabilisierungsstreben sind mit jeweils einem Innenflächenabschnitt des Gründungspfahls verbunden.

Die Erstreckungskomponenten der Stabilisierungsstreben spannen somit einen Raum auf. D.h., dass die Stabilisierungseinrichtung Erstreckungskomponenten aufweist, die in sämtliche Raumrichtungen orientiert sind. Beispielsweise erstrecken sich in Einbaulage des Gründungspfahls, wenn dieser also in einem Baugrund verankert ist und dessen Längsachse vorzugsweise parallel zur Schwerkraftrichtung orientiert ist, zwei der Stabilisierungsstreben in einer Ebene, vorzugsweise in einer horizontalen Ebene, wohingegen die dritte Stabilisierungsstrebe aus dieser Ebene herausragt, diese Stabilisierungsstrebe folglich eine Erstreckungskomponenten aufweist, die senkrecht zu der durch die anderen Stabilisierungsstreben aufgespannten Ebene orientiert ist.

Ein entsprechend ausgebildeter Gründungspfahl weist eine nochmals erhöhte Steifigkeit auf, denn innerhalb der Höhenerstreckung der Stabilisierungseinrichtung wirkt diese einer Lateralverformung des Gründungspfahls entgegen. Wenn beispielsweise auf einen entsprechend ausgebildeten und im Meeresuntergrund verankerten Gründungspfahl eine Welle trifft, dann werden die durch die Welle auf den Gründungspfahl ausgeübten Lateralkräfte nicht nur in der Ebene des Gründungspfahls, in der die Welle auf den Gründungspfahl trifft, mittels der Stabilisierungseinrichtung innerhalb des Grünungspfahls verteilt, sondern die Lateralkräfte werden mittels der Stabilisierungseinrichtung auch auf axial beabstandete Bereiche des Gründungspfahls verteilt. Folglich werden auf den Gründungspfahl ausgeübte Lateralkräfte mittels der Stabilisierungseinrichtung in dem Gründungspfahl gleichmäßiger verteilt.

Vorzugsweise umfasst die Stabilisierungseinrichtung zumindest vier Stabilisierungsstreben, die jeweils paarweise nicht parallel zueinander verlaufen. Dabei spannen eine erste Stabilisierungsstrebe und eine zweite Stabilisierungsstrebe eine erste Ebene auf, und eine dritte Stabilisierungsstrebe und eine vierte Stabilisierungsstrebe spannen eine zweite Ebene auf, wobei die erste Ebene und die zweite Ebene einen Winkel einschließen.

Da die erste Ebene und die zweite Ebene miteinander einen Winkel einschließen, verlaufen diese nicht parallel zueinander. Folglich weist auch ein entsprechend ausgebildeter Gründungspfahl den Vorteil auf, dass auf den Gründungspfahl ausgeübte Lateralkräfte mittels der Stabilisierungseinrichtung in dem Gründungspfahl gleichmäßiger verteilt werden.

Die Stabilisierungsstreben sind dabei vorzugsweise in einer Doppel-X-Geometrie zueinander angeordnet.

Vorzugsweise sind die Stabilisierungsstreben miteinander verbunden.

Durch eine Verbindung der Stabilisierungsstreben miteinander wird sowohl die Lateralsteifigkeit als auch die Torsionssteifigkeit des entsprechend ausgebildeten Gründungspfahls nochmals erhöht. Ferner werden die auf den Gründungspfahl ausgeübte Kräfte gleichmäßiger innerhalb des Gründungspfahls verteilt. Dadurch ist möglich, dass die Wandstärke des entsprechend ausgebildeten Gründungspfahls weiter reduziert werden kann.

Vorzugsweise ist der Gründungspfahl derart ausgebildet, dass die Stabilisierungseinrichtung acht Stabilisierungsstreben umfasst, wobei jeweils zwei Stabilisierungsstreben axial versetzt und kollinear zueinander verlaufen, so dass vier Stabilisierungsstrebenpaare () gebildet sind, die nicht parallel zueinander verlaufen. Dabei spannen ein erstes Stabilisierungsstrebenpaar und ein zweites Stabilisierungsstrebenpaar eine erste Ebene auf, und ein drittes Stabilisierungsstrebenpaar und ein viertes Stabilisierungsstrebenpaar spannen eine zweite Ebene auf, wobei die erste Ebene mit der zweiten Ebene einen Winkel einschließen. Der Gründungspfahl umfasst ferner eine Verbindungseinrichtung zum Verbinden der Stabilisierungsstreben miteinander, wobei die Verbindungseinrichtung acht Aufnahmen zum jeweiligen Aufnehmen eines Endes einer Stabilisierungsstrebe umfasst, wobei die axialen Erstreckungen von jeweils zwei Aufnahmen parallel zueinander verlaufen.

Da die erste Ebene und die zweite Ebene miteinander einen Winkel einschließen, verlaufen diese nicht parallel zueinander. Folglich weist auch ein entsprechend ausgebildeter Gründungspfahl den Vorteil auf, dass auf den Gründungspfahl ausgeübte Lateralkräfte mittels der Stabilisierungseinrichtung in dem Gründungspfahl gleichmäßiger verteilt werden.

Die Stabilisierungsstrebenpaare sind dabei vorzugsweise in einer Doppel-X-Geometrie zueinander angeordnet.

Die jeweiligen Aufnahmen der Verbindungseinrichtung können beispielsweise als Aufnahmebuchsen ausgebildet sein, in die die Enden der Stabilisierungsstreben eingesteckt werden können.

Vorzugsweise weist der Gründungspfahl zumindest zwei Gründungspfahlsegmente auf, wobei die Längsachsen der jeweiligen Gründungspfahlsegmente im Wesentlichen kollinear zueinander verlaufen.

Die Stabilisierungseinrichtung ist dann vorzugsweise mit Innenflächenabschnitten von einem Gründungspfahlsegment verbunden. Bei einer entsprechenden Ausführung kann die Stabilisierungseinrichtung in das Gründungspfahlsegment eingebracht und mit diesem verbunden werden, bevor das Gründungspfahlsegment mit einem anderen Gründungspfahlsegment verbunden wird. Eine entsprechende Ausbildung vereinfacht die Montage des Gründungspfahls. Gemäß einer weiteren möglichen Ausführung kann eine Stabilisierungseinrichtung mit zwei Gründungspfahlsegmenten verbunden sein. Beispielsweise kann ein Ende der Stabilisierungseinrichtung mit einem Gründungspfahlsegment und das andere Ende der Stabilisierungseinrichtung mit einem axial benachbarten Gründungspfahlsegment verbunden sein.

Die Gründungspfahlsegmente sind dabei vorzugsweise jeweils aus zumindest einem Teilzylindersegment gebildet. Dabei werden die Teilzylindersegmente durch Biegung einer Stahlplatte entlang deren Längenerstreckung oder entlang deren Breitenerstreckung gebildet.

Vorzugsweise sind die zwei Gründungspfahlsegmente mittels der Stabilisierungseinrichtung miteinander verbunden.

Durch eine entsprechende Ausbildung des Gründungspfahls können axial benachbarte Gründungspfahlsegmente einander abstützen. Somit werden Lateralkräfte nicht lediglich nur durch die Rundschweißnähte zwischen den Gründungspfahlsegmenten übertragen, sondern diese werden auch mittels der Stabilisierungseinrichtung von einem Gründungspfahlsegment auf ein axial benachbartes Gründungspfahlsegment übertragen. Dadurch erhöht sich die Stabilität des Gründungspfahls nochmals.

Vorzugsweise ist der erfindungsgemäße Gründungspfahl derart ausgebildet, dass die Gründungspfahlsegmente jeweils aus zumindest zwei Teilzylindersegmenten gebildet sind, die mittels der Stabilisierungseinrichtung miteinander verbunden sind.

Weiter vorzugsweise ist der erfindungsgemäße Gründungspfahl derart ausgebildet, dass Längskanten von benachbarten Teilzylindersegmenten eines Gründungspfahlsegments zueinander beabstandet sind, sodass der Gründungspfahl zwischen diesen Längskanten der Teilzylindersegmente Durchgangsöffnungen aufweist.

Die jeweiligen Teilzylindersegmente können miteinander mittels der Stabilisierungseinrichtung verbunden sein.

Bei dem entsprechend ausgebildeten Gründungspfahl sind weniger Längsschweißnähte zur Verbindung der Teilzylindersegmente miteinander und weniger Rundschweißnähte zur Verbindung der Gründungspfahlsegmente miteinander notwendig. Ferner wird durch die Durchgangsöffnungen in dem Gründungspfahl die Belastung des Gründungspfahls durch Wind und/oder Wellen reduziert, da Wind und/oder Wellen durch die Durchgangsöffnungen in den Gründungspfahl eintreten und austreten können, folglich durch den Gründungspfahl hindurchtreten können. Der entsprechend ausgebildete Gründungspfahl bietet folglich die Vorteile, dass der Gründungspfahl reduzierten Lateralkräften ausgesetzt ist, die Wandstärke des Gründungspfahls reduziert werden kann und die Gesamtschweißnahtlänge zur Errichtung des Gründungspfahls reduziert ist.

Vorzugsweise umfasst der Gründungspfahl Befestigungseinrichtungen, die an der Innenseite des Gründungspfahls angeordnet sind, wobei die Stabilisierungseinrichtung an den Befestigungseinrichtungen befestigt ist.

Ein entsprechend ausgebildeter Gründungspfahl bietet den Vorteil, dass die mittels der Stabilisierungseinrichtung auf die Innenseite des Gründungspfahls ausgebübten Kräfte dort über einen größeren Flächenbereich auf den Gründungspfahl ausgeübt werden, sodass die Wandstärke des Gründungspfahls nochmals reduziert werden kann.

Die Befestigungseinrichtungen können in Form von Befestigungsplatten, insbesondere in Form von Stahlplatten realisiert sein. Dabei schmiegen sich die Befestigungseinrichtungen vorteilhafter Weise der Innenkontur des Gründungspfahls an.

Die Befestigungseinrichtungen können mit der Innenfläche / den Innenflächenabschnitten des Gründungspfahls verschweißt und/oder verklebt sein. Ferner können die Befestigungseinrichtungen mit der Innenfläche / den Innenflächenabschnitten mittels Bolzen, Schrauben, usw. verbunden sein.

Die Enden der Stabilisierungseinrichtung / der Stabilisierungsstreben können jeweils mit einer Befestigungseinrichtung verbunden sein. Dabei können die Enden der Stabilisierungsstreben mit der Befestigungseinrichtung gelenkig verbunden sein. Beispielsweise können die Befestigungseinrichtungen jeweils eine Befestigungsöse aufweisen, die mittels eines Bolzens oder einer Schraube mit einer endseitig an einer Stabilisierungsstrebe vorgesehenen Öse verbunden ist.

Weitere Vorteile, Einzelheiten und Merkmale der Erfindung ergeben sich nachfolgend aus den erläuterten Ausführungsbeispielen. Dabei zeigen im Einzelnen:
- Figur 1a:: eine schematische und perspektivische Ansicht eines erfindungsgemäßen Gründungspfahls gemäß einer ersten Ausführungsform der vorliegenden Erfindung;
- Figur 1b:: eine Draufsicht auf den in Figur 1a dargestellten Gründungspfahl;
- Figur 1c:: eine Draufsicht auf eine Abwandlung des in Figur 1b dargestellten Gründungspfahls;
- Figur 1d:: eine Draufsicht auf eine weitere Abwandlung des in Figur 1a dargestellten Gründungspfahls;
- Figur 2a:: eine schematische und perspektivische Ansicht eines erfindungsgemäßen Gründungspfahls gemäß einer zweiten Ausführungsform der vorliegenden Erfindung;
- Figur 2b:: eine Draufsicht auf den in Figur 2a dargestellten Gründungspfahl;
- Figur 2c:: eine Draufsicht auf den Gründungspfahl gemäß der zweiten Ausführungsform mit einer abgewandelten Stabilisierungseinrichtung;
- Figur 3:: eine Draufsicht auf einen erfindungsgemäßen Gründungspfahl gemäß einer dritten Ausführungsform der vorliegenden Erfindung;

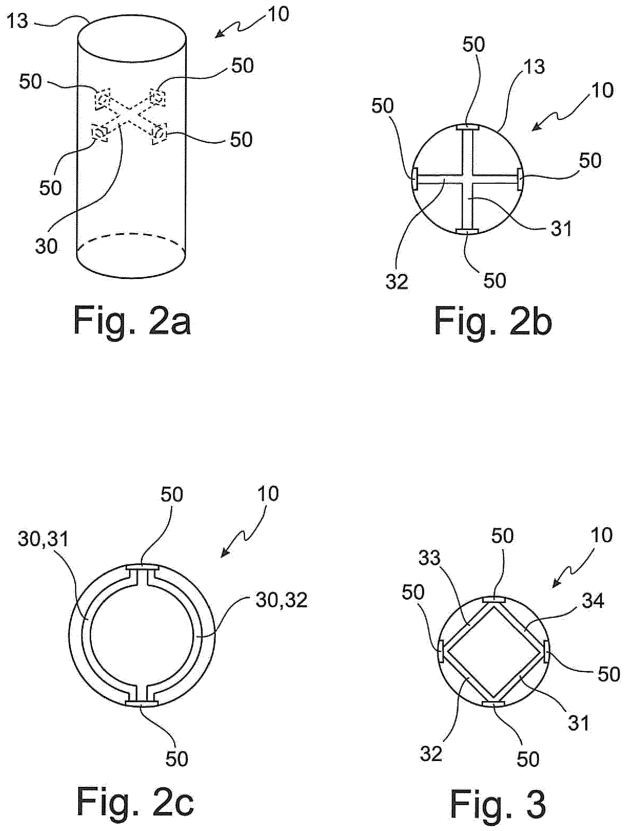

- Figur 3:: eine Draufsicht auf einen erfindungsgemäßen Gründungspfahl mit einer nochmals abgewandelten Stabilisierungseinrichtung;

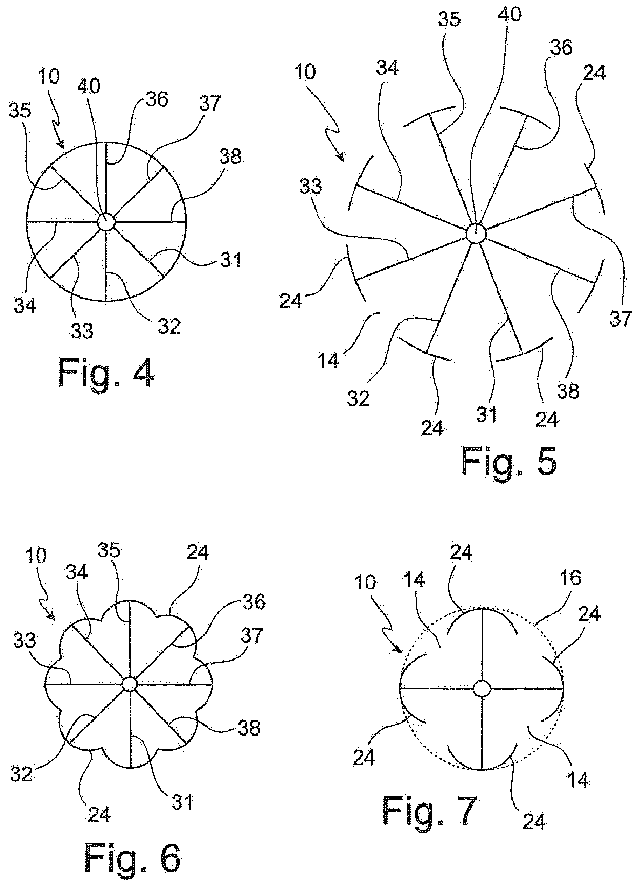

- Figur 4:: eine Draufsicht auf einen Gründungspfahl gemäß einer vierten Ausführungsform der vorliegenden Erfindung;
- Figur 5:: eine Draufsicht auf einen Gründungspfahl gemäß einer fünften Ausführungsform der vorliegenden Erfindung;
- Figur 6:: eine Draufsicht auf einen Gründungspfahl gemäß einer sechsten Ausführungsform der vorliegenden Erfindung;
- Figur 7:: eine Draufsicht auf einen Gründungspfahl gemäß einer siebten Ausführungsform der vorliegenden Erfindung;

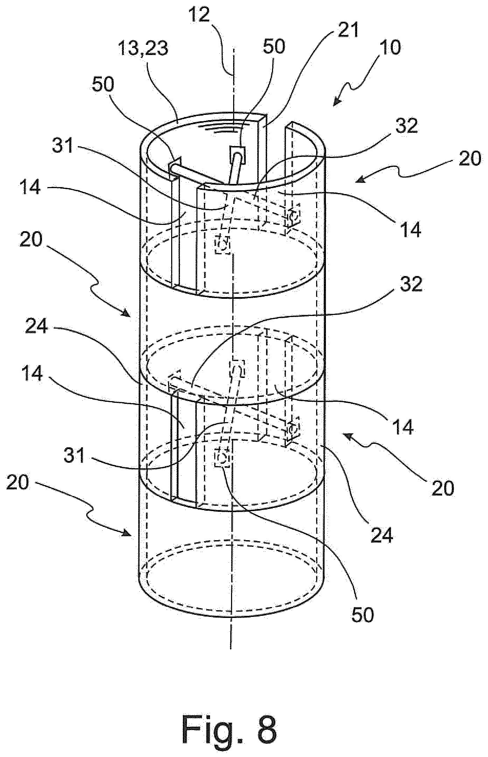

- Figur 8:: eine Draufsicht auf einen Gründungspfahl gemäß einer achten Ausführungsform der vorliegenden Erfindung;

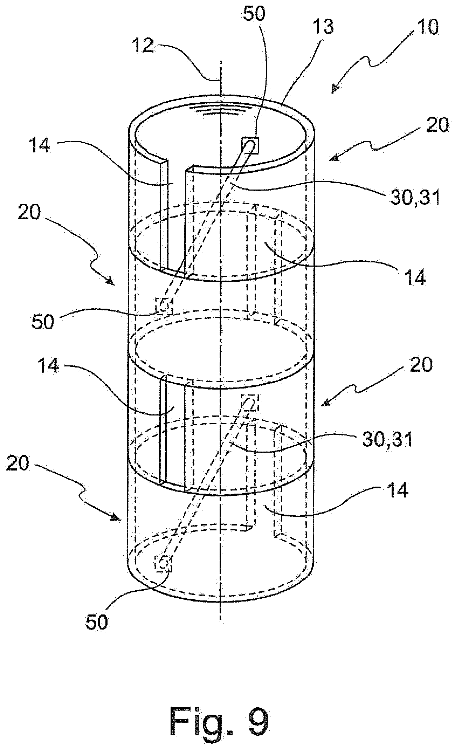

- Figur 9:: eine Draufsicht auf einen Gründungspfahl gemäß einer neunten Ausführungsform der vorliegenden Erfindung;

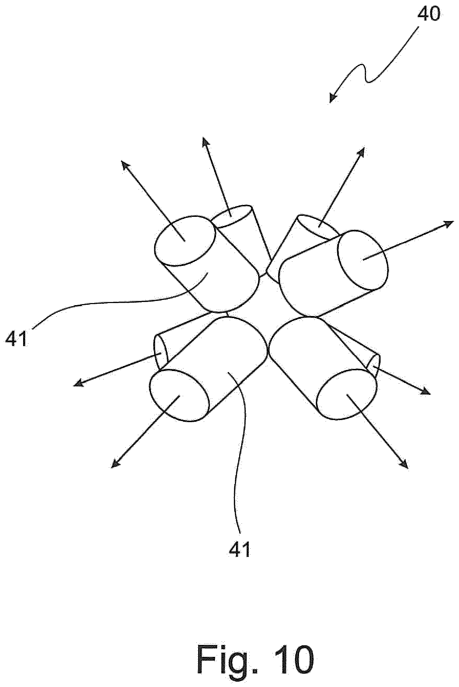

- Figur 10:: eine perspektivische Ansicht einer Verbindungseinrichtung zum Verbinden von Verbindungsstreben miteinander;

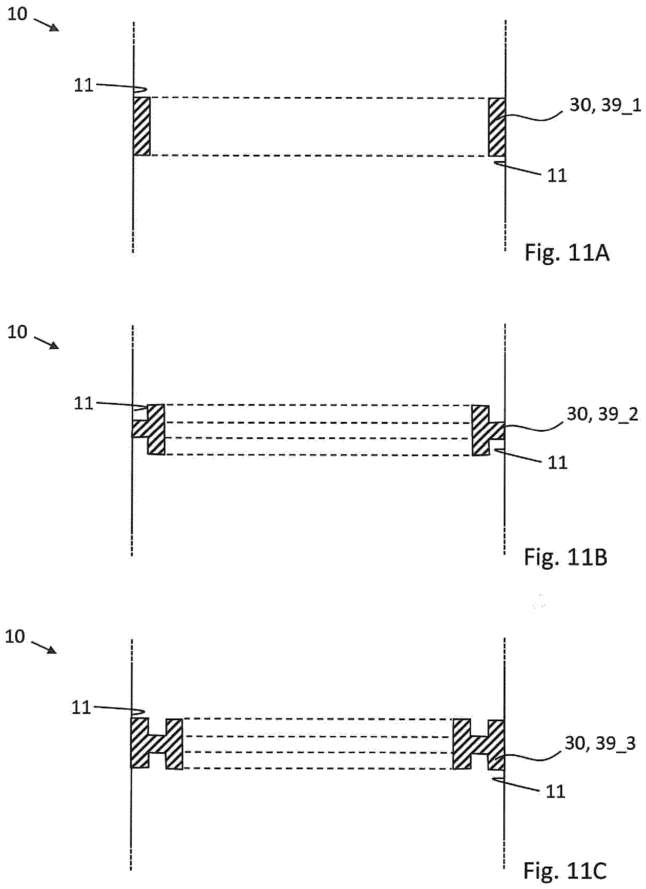

- Figur 11A:: eine schematische Querschnittsdarstellung eines Teils eines Gründungspfahls gemäß einer zehnten Ausführungsform der vorliegenden Erfindung, bei dem die Stabilisierungseinrichtung als Stabilisierungsring mit rechteckförmigen Querschnitt ausgebildet ist;
- Figur 11B:: eine schematische Querschnittsdarstellung eines Teils eines Gründungspfahls gemäß einer elften Ausführungsform der vorliegenden Erfindung, bei dem die Stabilisierungseinrichtung als Stabilisierungsring mit T-förmigen Querschnitt ausgebildet ist; und
- Figur 11C:: eine schematische Querschnittsdarstellung eines Teils eines Gründungspfahls gemäß einer zwölften Ausführungsform der vorliegenden Erfindung, bei dem die Stabilisierungseinrichtung als Stabilisierungsring mit Doppel-T-förmigen Querschnitt ausgebildet ist.

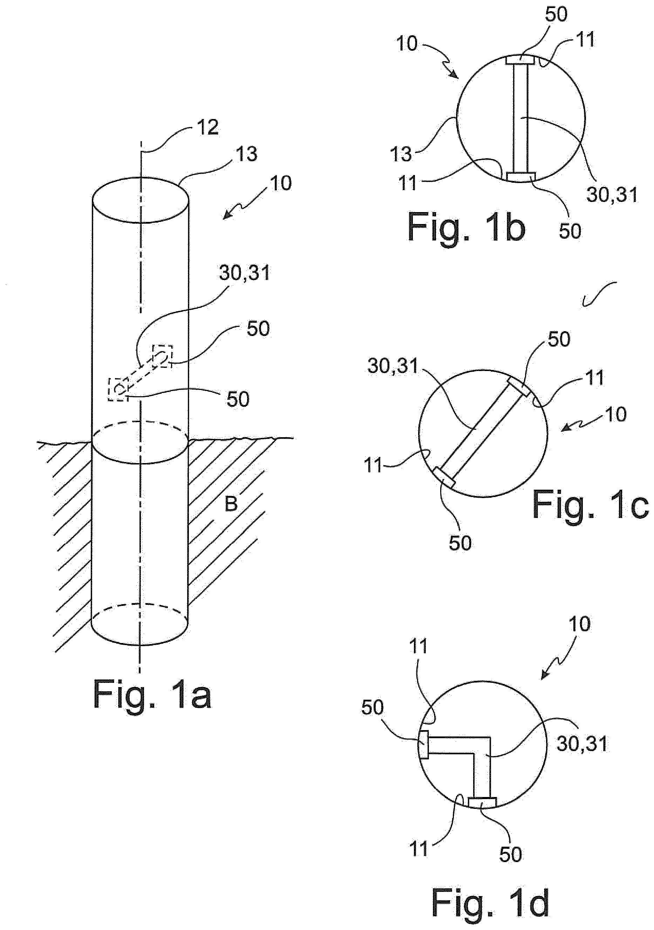

Figur 1a zeigt eine schematische und perspektivische Ansicht eines erfindungsgemäßen Gründungspfahls 10 gemäß einer ersten Ausführungsform der vorliegenden Erfindung, und Figur 1b zeigt den in Figur 1a dargestellten Gründungspfahl 10 in Draufsicht, folglich also in Draufsicht auf eine Stirnkante 13 des Gründungspfahls 10. Der Gründungspfahl 10 ist in einem Baugrund B eingebracht, wobei der Baugrund B auch der Meeresboden B sein kann. Das Einbringen bzw. Eintreiben des Gründungspfahls 10 in den Baugrund B kann mittels Schlagrammen und/oder Vibrationsrammen erfolgen. Folglich ist ein unterer Teil des Gründungspfahls 10 im Baugrund B verankert, und ein oberer Teil des Gründungspfahls 10 ist oberhalb des Baukunst B angeordnet. Auf dem oberen Bereich des Gründungspfahls 10 kann ein weiteres Bauwerk, beispielsweise ein nicht dargestelltes Übergangsstück und/oder eine nicht dargestellte Gondel einer Windkraftanlage befestigt werden.

Der Gründungspfahl 10 umfasst eine Stabilisierungseinrichtung 30, die in dem dargestellten Ausführungsbeispiel als Stabilisierungsstrebe 31 ausgebildet ist. Die Stabilisierungsstrebe 31 ist mit zwei Befestigungseinrichtungen 50 verbunden, die an einander gegenüberliegenden Innenflächenabschnitten 11 des Gründungspfahls 10 befestigt sind. Bei dem dargestellten Ausführungsbeispiel sind die Innenflächenabschnitte 11 einander gegenüberliegend angeordnet und weisen einen Winkelabstand von 180° auf. Die Stabilisierungsstrebe 31 ist zur Aufnahme von Druckkräften und zur Aufnahme von Zugkräften ausgebildet, sodass die Stabilisierungsstrebe 31 sowohl einer Lateralverformung als auch einer Torsionsverformung des Gründungspfahls 10 entgegenwirkt.

Selbstverständlich ist es auch möglich, dass die Stabilisierungseinrichtung 10 beispielsweise als Stabilisierungsseil 10 ausgebildet ist, das lediglich zur Aufnahme von Zugkräften ausgebildet ist. Auch bei einer entsprechenden Ausbildung der Stabilisierungseinrichtung 10 wirkt diese einer Lateral- und einer Torsionsverformung des Gründungspfahls 10 entgegen.

Durch die innerhalb des Gründungspfahls 10 angeordnete und mit den Innenflächenabschnitten 11 des Gründungspfahls 10 verbundene Stabilisierungsstrebe 31 werden durch Windeinwirkung und/oder Welleneinwirkung auf den Gründungspfahl 10 ausgeübte Kräfte innerhalb des Gründungspfahls 10 verteilt. Somit weist der erfindungsgemäße Gründungspfahl 10 eine erhöhte Lateralsteifigkeit und eine erhöhte Torsionssteifigkeit auf. Aus diesem Grund kann die Wandstärke des Gründungspfahls 10 erheblich reduziert werden, da dessen Lateralsteifigkeit und Torsionssteifigkeit mittels der Stabilisierungseinrichtung 30 erheblich vergrößert wird. Somit ist für die Lateralsteifigkeit und die Torsionssteifigkeit des Gründungspfahls 10 nicht lediglich dessen Außengeometrie und dessen Wandstärke bestimmend.

Der Gründungspfahl 10 wird üblicherweise aus einer Vielzahl von Gründungspfahlsegmenten 20 (siehe Figuren 8 und 9) zusammengesetzt, deren Stirnkanten miteinander verbunden werden. Diese Verbindung erfolgt üblicherweise über eine Verschweißung. Die jeweiligen Gründungspfahlsegmente 20 werden durch Biegung von Stahlplatten erzeugt, wobei die sich gegenüberliegenden Seitenkanten miteinander verbunden werden, wobei diese Verbindung auch durch eine Verschweißung mittels einer Längsschweißnaht oder auch mittels einer Klammerung realisiert werden kann. Ein Gründungspfahlsegment 20 kann aber auch aus zwei oder mehr Teilzylindersegmenten hergestellt werden (siehe Figur 8).

Die Befestigung der Befestigungseinrichtungen 50 mit der Innenseite des Gründungspfahls 10 kann mittels einer Verklebung und/oder einer Verschweißung und/oder einer Verschraubung der Befestigungseinrichtungen 50 an den Innenflächenabschnitten 11 des Gründungspfahls 10 erfolgen. Die Befestigungseinrichtungen 50 sind in dem dargestellten Ausführungsbeispiel als Befestigungsplatten 50 ausgebildet. Mittels der Befestigungsplatten 50 werden die mittels der Stabilisierungsstrebe 31 auf die Innenflächenabschnitte 11 des Gründungspfahls 10 ausgeübten Kräften über einen größeren Flächenbereich verteilt, sodass dadurch die Wandstärke des Gründungspfahls 10 reduziert werden kann.

In Figur 1c ist ein leicht abgewandelter Gründungspfahl 10 gemäß der ersten Ausführungsform in Draufsicht dargestellt. Der in Figur 1c dargestellte Gründungspfahl 10 unterscheidet sich von dem in den Figuren 1a und 1b dargestellten Gründungspfahl 10 dadurch, dass der Winkelabstand der Befestigungseinrichtungen 50 zueinander etwa 135° entspricht. Auch bei einer entsprechenden Positionierung der Befestigungsplatten 50 an der Innenfläche des Gründungspfahls 10 wird eine Erhöhung der Torsionssteifigkeit und der Lateralsteifigkeit des Gründungspfahls 10 erreicht. Selbstverständlich ist es auch möglich, dass der Winkelabstand der Befestigungseinrichtungen 50 zueinander einen anderen Wert annimmt. Auch liegt es im Rahmen der Erfindung, dass die Befestigungseinrichtungen 50 in Einbaulage des Gründungspfahls 10 nicht in einer gemeinsamen Horizontalebene angeordnet sind. Die Befestigungseinrichtungen 50 können auch axial zueinander beabstandet sein, sodass die mit den Befestigungseinrichtungen 50 verbundene Stabilisierungsstrebe 31 auch eine Erstreckungskomponente in Axialrichtung des Gründungspfahls 10 aufweist.

In Figur 1d ist eine weitere Abwandlung des Gründungspfahls 10 gemäß der ersten Ausführungsform in Draufsicht dargestellt. Der Winkelabstand der Befestigungseinrichtungen 50 beträgt dabei 90°, und die Befestigungsstrebe 10 ist nicht gerade ausgebildet sondern weist eine Biegung auf. Der übrige Aufbau des in Figur 1d dargestellten Gründungspfahls 10 ist jedoch identisch mit dem Aufbau der in den Figuren 1a bis 1c dargestellten Gründungspfahls 10.

Figur 2a zeigt einen Gründungspfahl 10 gemäß einer zweiten Ausführungsform der vorliegenden Erfindung in perspektivische Darstellung, und Figur 2b zeigt den in Figur 2a dargestellten Gründungspfahl 10 in Draufsicht. Die Stabilisierungseinrichtung 30 umfasst zwei Stabilisierungsstreben 31, 32, die in dem dargestellten Ausführungsbeispiel miteinander verbunden sind. Es ist jedoch auch möglich, dass die Stabilisierungsstreben 31, 32 nicht miteinander verbunden sind. Die jeweiligen Enden der Stabilisierungsstreben 31, 32 sind mit vier Befestigungsplatten 50 verbunden. Bei dem dargestellten Ausführungsbeispiel befinden sich in Einbaulage des Gründungspfahls 10 die Befestigungsplatten 50 in einer gemeinsamen horizontalen Ebene. Die vorliegende Erfindung ist jedoch auf eine entsprechende Anordnung der Stabilisierungseinrichtung 30 in den Gründungspfahl 10 nicht beschränkt. Die Befestigungsplatten 50 können auch axial zueinander beabstandet sein, sodass dann die Stabilisierungsstreben 31, 32 auch Erstreckungskomponenten in Axialrichtung des Gründungspfahls 10 aufweisen.

In Figur 2c ist eine Abwandlung des Gründungspfahls 10 gemäß der zweiten Ausführungsform dargestellt. Der Gründungspfahl 10 umfasst lediglich zwei Befestigungseinrichtungen 50, die einander gegenüberliegend angeordnet sind. Ferner weisen die Stabilisierungsstreben 31, 32 der Stabilisierungseinrichtung 30 jeweils eine Biegung auf und schmiegen sich der Innenfläche des Gründungspfahls 10 an. Auch ist ersichtlich, dass die Befestigungsplatten 50 mit jeweils zwei Enden der Stabilisierungsstreben 31, 32 verbunden sind. Durch eine entsprechende Ausbildung der Stabilisierungsstreben 31, 32 kann der Innenraumbereich des Gründungspfahls 10 verbessert ausgenutzt werden.

In Figur 3 ist einen Gründungspfahl 10 gemäß einer dritten Ausführungsform der vorliegenden Erfindung in Draufsicht dargestellt. Bei diesem Gründungspfahl 10 weist die Stabilisierungseinrichtung vier Stabilisierungsstreben 31-34 auf, die mit vier Befestigungseinrichtungen 50 mit der Innenwand des Gründungspfahls 10 verbunden sind. Die Befestigungseinrichtungen 50 weisen zueinander jeweils einen Winkelabstand von 90° auf, wobei zwei direkt zueinander benachbarte Befestigungseinrichtungen 50 mittels jeweils einer Stabilisierungsstrebe 31-34 verbunden sind. Dadurch wird ein relativ großer Freiraum im Innenbereich des Gründungspfahls 10 erreicht, der eine erhöhte Nutzbarkeit aufweist.

Die Befestigungseinrichtungen 50 können selbstverständlich in Einbaulage des Gründungspfahls 10 axial zueinander beabstandet sein, sodass sich dann die Befestigungsstreben 31-34 nicht lediglich nur in einer Horizontalebene des Gründungspfahls 10 erstrecken sondern ebenfalls Erstreckungskomponenten aufweisen, die parallel zu der Längsachse 12 des Gründungspfahls 10 gerichtet sind.

Aus Figur 4 ist ein Gründungspfahl 10 gemäß einer vierten Ausführungsformen in Draufsicht dargestellt. Die Stabilisierungseinrichtung 30 umfasst dabei acht Stabilisierungsstreben 31-38, deren jeweiligen Enden mit einander gegenüberliegenden Innenflächenabschnitten 11 des Gründungspfahls 10 verbunden sind. Aus Figur 4 ist ersichtlich, dass die jeweiligen Stabilisierungsstreben 31-38 mittels einer schematisch dargestellten Verbindungseinrichtung 40 miteinander verbunden sind.

Aus Figur 5 ist ein Gründungspfahl 10 gemäß einer fünften Ausführungsform in Draufsicht dargestellt. Das dargestellte Gründungspfahlsegment 20 ist aus acht Teilzylindersegmenten 24 zusammengesetzt. Die jeweiligen Teilzylindersegmente 24 sind dabei mittels der Stabilisierungseinrichtung 30 miteinander verbunden. Auch bei dem in Figur 5 dargestellten Gründungspfahl 10 sind die jeweiligen Verbindungsstreben 31-38 mittels einer Verbindungseinrichtung 40 miteinander verbunden. Die jeweiligen Teilzylindersegmente 24 sind radial zueinander beabstandet, sodass zwischen zwei Teilzylindersegmenten 24 jeweils eine Durchgangsöffnung 14 des Gründungspfahls 10 gebildet ist. Bei einer entsprechenden Ausbildung des Gründungspfahls 10 können Wind und/oder Wellen in den Gründungspfahl 10 eintreten und aus diesem austreten, sodass dadurch die Belastung des Gründungspfahls 10 vermindert wird.

Figur 6 zeigt einen Gründungspfahl 10 gemäß einer sechsten Ausführungsform in Draufsicht. Bei dem Gründungspfahl 10 gemäß der sechsten Ausführungsform weisen die jeweiligen Teilzylindersegmente 24 einen Krümmungsradius auf, der kleiner ist als ein Krümmungsradius der Einhüllenden des Gründungspfahls 10. Durch eine entsprechende Ausbildung des Gründungspfahls 10 weist dieser eine erhöhte Lateralsteifigkeit und auch eine erhöhte Torsionssteifigkeit auf. Der übrige Aufbau des in Figur 6 dargestellten Gründungspfahls 10 ist identisch mit dem in Figur 4 dargestellten Gründungspfahl 10.

Bei den in den Figuren 4, 5 und 6 dargestellten Gründungspfählen 10 weisen die Stabilisierungseinrichtungen 30 jeweils 8 Stabilisierungsstreben 31-38 auf. Die Stabilisierungseinrichtungen 30 können aber auch so ausgebildet sein, dass die jeweils parallel zueinander verlaufenden Verbindungsstreben 31-38 jeweils als eine Verbindungstrebe angesehen werden, sodass dann die in den Figuren 4 bis 6 dargestellten Gründungspfähle 10 jeweils lediglich vier Stabilisierungsstreben aufweisen. Bei sämtlichen in den Figuren 4 bis 6 dargestellten Gründungspfählen 10 können die Verbindungspunkte der Stabilisierungsstreben 31-38 mit der Innenseite des Gründungspfahls 10 axial zueinander beabstandet sein, sodass in Einbaulage des Gründungspfahls 10 die Stabilisierungseinrichtung 30 bzw. die Stabilisierungsstreben 31-38 Erstreckungskomponenten aufweisen, die parallel zu der Längsachse 12 des Gründungspfahls 10 verlaufen.

Figur 8 zeigt in schematischer, perspektivischer Darstellung einen Gründungspfahl 10 gemäß einer achten Ausführungsform der vorliegenden Erfindung. Der Gründungspfahl 10 ist aus vier Gründungspfahlsegmenten 20 zusammengesetzt, indem die jeweiligen Gründungspfahlsegmente 20 an deren Kontaktkanten miteinander mittels einer Rundschweißnaht verbunden werden. Das oberste Gründungspfahlsegment 20 ist aus zwei Teilzylindersegmenten 24 zusammengesetzt, die mittels einer Stabilisierungseinrichtung 30 miteinander verbunden sind. Die Teilzylindersegmente 14 sind radial zueinander beabstandet, sodass zwischen den Längskanten 21 der jeweiligen Teilzylindersegmente 24 Durchgangsöffnungen 14 des Gründungspfahls 10 gebildet sind.

Die Stabilisierungseinrichtung 30 weist bei dem dargestellten Ausführungsbeispiel zwei Stabilisierungsstreben auf, deren Enden jeweils mit einer Befestigungsplatte 50 verbunden sind. Dabei erstrecken sich in Einbaulage des Gründungspfahls 10 die Stabilisierungsstreben 31, 32 in der Horizontalebene. Selbstverständlich ist es aber auch möglich, dass die Befestigungsplatten 50 derart an der Innenfläche des Gründungspfahls 10 befestigt sind, dass in Einbaulage des Gründungspfahls 10 die Stabilisierungsstreben 31, 32 Erstreckungskomponenten aufweisen, die parallel zu der Längsachse 12 des Gründungspfahls 10 verlaufen.

Aus Figur 8 ist ersichtlich, dass Gründungspfahlsegmente 20, die jeweils zumindest eine Durchgangsöffnung 14 aufweisen, axial von Gründungspfahlsegmenten 20 eingeschlossen sind, die keine Durchgangsöffnungen 14 aufweisen. Dadurch werden die Gründungspfahlsegmente 20, die aus zumindest zwei Teilzylindersegmenten 24 zusammengesetzt sind, zusätzlich zu der Stabilisierung mittels der Stabilisierungseinrichtung 30 auch dur ch die axial benachbarten Gründungspfähle 20 stabilisiert.

In Figur 9 ist ein Gründungspfahl 10 gemäß einer neunten Ausführungsform dargestellt. Es ist ersichtlich, dass die axial zueinander benachbarten Gründungspfahlsegmente 20 jeweils aus einem Teilzylindersegment 24 gebildet sind, wobei Längskanten 21 der jeweiligen Teilzylindersegmente 24 zueinander beabstandet sind, sodass der so gebildete Gründungspfahl 10 jeweils Durchgangsöffnungen 14 aufweist. Die Stabilisierungseinrichtung 30 zwei axial zueinander benachbarte Gründungspfahlsegmente 20 miteinander verbindet und miteinander stabilisiert. Aus Figur 9 ist ferner ersichtlich, dass die Durchgangsöffnungen 14 von miteinander axial benachbarten Gründungspfahlsegmenten 20 einen Winkelabstand von 180° aufweisen.

Figur 10 zeigt eine Verbindungseinrichtung 40 zum Verbinden von Stabilisierungsstreben 31-38 miteinander. In dem dargestellten Ausführungsbeispiel weist die Verbindungseinrichtung 40 acht Aufnahmen 41 bzw. Aufnahmebuchsen 41 auf, in die die Stabilisierungsstreben 31-38 (siehe Figuren 4, 5 und 6) eingeführt werden können und mit der Verbindungseinrichtung 40 verbunden werden. Die Anordnung der Aufnahmen 41 der Verbindungseinrichtung 40 ist geometrisch derart gewählt, dass die in die Aufnahmen 41 eingesetzten Stabilisierungsstreben 30-38 eine Doppel-X-Geometrie aufweisen. Eine entsprechende Ausbildung der Stabilisierungseinrichtung 30 bietet eine besonders hohe Lateral- und Torsionssteifigkeit für den Gründungspfahl 10.

Figur 11A zeigt eine schematische Querschnittsdarstellung eines Teils eines Gründungspfahls 10 gemäß einer zehnten Ausführungsform der vorliegenden Erfindung, bei dem die Stabilisierungseinrichtung 30 als Stabilisierungsring 39_1 mit rechteckförmigen Querschnitt ausgebildet ist. Der Stabilisierungsring 39_1 ist über dessen gesamten Außenumfang mit der Innenfläche 11 des Gründungspfahls 10 verbunden. Der Stabilisierungsring 39_1 umspannt einen Winkel von 360°.

Figur 11B zeigt eine schematische Querschnittsdarstellung eines Teils eines Gründungspfahls 10 gemäß einer elften Ausführungsform der vorliegenden Erfindung, bei dem die Stabilisierungseinrichtung 30 als Stabilisierungsring 39_2 mit T-förmigen Querschnitt ausgebildet ist. Der Stabilisierungsring 39_2 ist über dessen gesamten Außenumfang mit der Innenfläche 11 des Gründungspfahls 10 verbunden. Der Stabilisierungsring 39_2 umspannt einen Winkel von 360°.

Figur 11C zeigt eine schematische Querschnittsdarstellung eines Teils eines Gründungspfahls 10 gemäß einer zwölften Ausführungsform der vorliegenden Erfindung, bei dem die Stabilisierungseinrichtung 30 als Stabilisierungsring 39_3 mit Doppel-T-förmigen Querschnitt ausgebildet ist. Der Stabilisierungsring 39_3 ist über dessen gesamten Außenumfang mit der Innenfläche 11 des Gründungspfahls 10 verbunden. Der Stabilisierungsring 39_3 umspannt einen Winkel von 360°.

### Bezugszeichenliste

- 10: Gründungspfahl
- 11: Innenflächenabschnitt (des Gründungspfahls)
- 12: Längsachse (des Gründungspfahls)
- 13: Stirnkante (des Gründungspfahls)
- 14: Durchgangsöffnung (des Gründungspfahls)
- 20: Gründungspfahlsegment
- 21: Längskante / Blechkante / Materialkante (des Gründungspfahlsegments)
- 23: Stirnkante (des Gründungspfahlsegments)
- 24: Teilzylindersegment (des Gründungspfahlsegments)
- 30: Stabilisierungseinrichtung
- 31-38: Stabilisierungsstrebe
- 39_1: Stabilisierungsring
- 39_2: Stabilisierungsring (mit T-förmigen Querschnitt)
- 39_3: Stabilisierungsring (mit Doppel-T-förmigen Querschnitt)
- 40: Verbindungseinrichtung
- 41: Aufnahme / Aufnahmebuchse / Buchse (der Verbindungseinrichtung)
- 50: Befestigungseinrichtung / Befestigungsplatte
- B: Baugrund / Meeresboden

## Patentansprüche

1. Gründungspfahl (10), wobei der Gründungspfahl (10) eine Stabilisierungseinrichtung (30; 31-38, 39_1, 39_2, 39_3) umfasst, die innerhalb des Gründungspfahls (10) angeordnet und mit zumindest zwei Innenflächenabschnitten (11) des Gründungspfahls (10) verbunden ist, wobei mittels der Stabilisierungseinrichtung (30; 31-38, 39_1, 39_2, 39_3) Druck- und/oder Zugkräfte übertragbar sind, so dass die Stabilisierungseinrichtung (30; 31-38, 39_1, 39_2, 39_3) einer Lateralverformung und/oder einer Torsionsverformung des Gründungspfahls (10) entgegenwirkt, **dadurch gekennzeichnet, dass** die Stabilisierungseinrichtung (30; 31-38) zumindest eine Stabilisierungsstrebe (31-38) umfasst, deren zwei gegenüberliegende Enden mit zwei Innenflächenabschnitten (11) des Gründungspfahls (10) verbunden sind.

2. Gründungspfahl (10) nach Anspruch 1, **dadurch gekennzeichnet, dass** die Stabilisierungseinrichtung (30; 31-38, 39_1, 39_2, 39_3) einen Stabilisierungsring (39_1, 39_2, 39_3) umfasst, der innerhalb des Gründungspfahls (10) angeordnet und mit zumindest zwei Innenflächenabschnitten (11) des Gründungspfahls (10) verbunden ist.

3. Gründungspfahl (10) nach einem der vorhergehenden Ansprüche **gekennzeichnet durch** die folgenden Merkmale:
- die Stabilisierungseinrichtung (30; 31-38) umfasst zumindest zwei Stabilisierungsstreben (31-38), deren Erstreckungskomponenten zumindest abschnittsweise nicht parallel zueinander verlaufen; und
- die jeweiligen Enden der Stabilisierungsstreben (31-38) sind mit jeweils einem Innenflächenabschnitt (11) des Gründungspfahls (10) verbunden.

4. Gründungspfahl (10) nach einem der vorhergehenden Ansprüche, **gekennzeichnet durch** die folgenden Merkmale:
- die Stabilisierungseinrichtung (30; 31-38) umfasst zumindest drei Stabilisierungsstreben (31-38), deren Erstreckungskomponenten jeweils paarweise nicht parallel zueinander verlaufen; und
- die jeweiligen Enden der Stabilisierungsstreben (31-38) sind mit jeweils einem Innenflächenabschnitt (11) des Gründungspfahls (10) verbunden.

5. Gründungspfahl (10) nach einem der vorhergehenden Ansprüche, **gekennzeichnet durch** die folgenden Merkmale:
- die Stabilisierungseinrichtung (30; 31-38) umfasst vier Stabilisierungsstreben (31-38), die jeweils paarweise nicht parallel zueinander verlaufen; und
- eine erste Stabilisierungsstrebe (31-38) und eine zweite Stabilisierungsstrebe (31-38) spannen eine erste Ebene auf, und eine dritte Stabilisierungsstrebe (31-38) und eine vierte Stabilisierungsstrebe (31-38) spannen eine zweite Ebene auf, wobei die erste Ebene und die zweite Ebene einen Winkel einschließen.

6. Gründungspfahl (10) nach einem der vorhergehenden Ansprüche, **dadurch gekennzeichnet, dass** die Stabilisierungsstreben (31-38) miteinander verbunden sind.

7. Gründungspfahl (10) nach einem der vorhergehenden Ansprüche, **gekennzeichnet durch** die folgenden Merkmale:
- die Stabilisierungseinrichtung (30; 31-38) umfasst acht Stabilisierungsstreben (31-38);
- jeweils zwei Stabilisierungsstreben (31-38) verlaufen axial versetzt und kollinear zueinander, so dass vier Stabilisierungsstrebenpaare gebildet sind, die nicht parallel zueinander verlaufen;
- ein erstes Stabilisierungsstrebenpaar und ein zweites Stabilisierungsstrebenpaar spannen eine erste Ebene auf, und ein drittes Stabilisierungsstrebenpaar und ein viertes Stabilisierungsstrebenpaar spannen eine zweite Ebene auf, wobei die erste Ebene mit der zweiten Ebene einen Winkel einschließen; und
- der Gründungspfahl (10) umfasst ferner eine Verbindungseinrichtung (40) zum Verbinden der Stabilisierungsstreben (31-38), wobei die Verbindungseinrichtung (40) acht Aufnahmen (41) zum jeweiligen Aufnehmen eines Endes einer Stabilisierungsstrebe (31-38) umfasst, wobei die axialen Erstreckungen von jeweils zwei Aufnahmen (41) parallel zueinander verlaufen.

8. Gründungspfahl (10) nach einem der vorhergehenden Ansprüche, **dadurch gekennzeichnet, dass** der Gründungspfahl (10) zumindest zwei Gründungspfahlsegmente (20) umfasst, wobei die Längsachsen der jeweiligen Gründungspfahlsegmente (20) im Wesentlichen kollinear zueinander verlaufen.

9. Gründungspfahl (10) nach Anspruch 8, **dadurch gekennzeichnet, dass** die zwei Gründungspfahlsegmente (20) mittels der Stabilisierungseinrichtung (30; 31-38, 39_1, 39_2, 39_3) miteinander verbunden sind.

10. Gründungspfahl (10) nach Anspruch 8 oder 9, **dadurch gekennzeichnet, dass** die Gründungspfahlsegmente (20) jeweils aus zumindest zwei Teilzylindersegmenten (24) gebildet sind, die mittels der Stabilisierungseinrichtung (30; 31-38, 39_1, 39_2, 39_3) miteinander verbunden sind.

11. Gründungspfahl (10) nach Anspruch 10, **dadurch gekennzeichnet, dass** Längskanten (21) von einander benachbarten Teilzylindersegmenten (24) des Gründungspfahlsegments (10) zueinander beabstandet sind, so dass der Gründungspfahl (10) zwischen diesen Längskanten (21) der Teilzylindersegmente (24) Durchgangsöffnungen (14) aufweist.

12. Gründungspfahl (10) nach einem der vorhergehenden Ansprüchen, **dadurch gekennzeichnet, dass** der Gründungspfahl (10) Befestigungseinrichtungen (50) umfasst, die an der Innenseite des Gründungspfahls (10) angeordnet sind, wobei die Stabilisierungseinrichtung (30) an den Befestigungseinrichtungen (50) befestigt sind.

## Claims

1. A foundation pile (10), wherein the foundation pile (10) comprises a stabilization device (30; 31-38, 39_1, 39_2, 39_3) that is arranged within the foundation pile (10) and is connected to at least two inner surface sections (11) of the foundation pile (10), wherein compressive and/or tensile forces can be transmitted by means of the stabilization device (30; 31-38, 39_1, 39_2, 39_3), such that the stabilization device (30; 31-38, 39_1, 39_2, 39_3) counteracts lateral deformation and/or torsional deformation of the foundation pile (10), **characterized in that** the stabilization device (30; 31-38) comprises at least one stabilization strut (31-38), the two opposite ends of which are connected to two inner surface sections (11) of the foundation pile (10).

2. The foundation pile (10) as claimed in claim 1, **characterized in that** the stabilization device (30; 31-38, 39_1, 39_2, 39_3) comprises a stabilization ring (39_1, 39_2, 39_3), which is arranged within the foundation pile (10) and is connected to at least two inner surface sections (11) of the foundation pile (10).

3. The foundation pile (10) as claimed in one of the preceding claims, **characterized by** the following features:
- the stabilization device (30; 31-38) comprises at least two stabilization struts (31-38), the components of extent of which do not extend parallel to one another, at least in some section or sections; and
- the respective ends of the stabilization struts (31-38) are each connected to one inner surface section (11) of the foundation pile (10).

4. The foundation pile (10) as claimed in one of the preceding claims, **characterized by** the following features:
- the stabilization device (30; 31-38) comprises at least three stabilization struts (31-38), respective pairs of the components of extent of which do not extend parallel to one another; and
- the respective ends of the stabilization struts (31-38) are each connected to one inner surface section (11) of the foundation pile (10).

5. The foundation pile (10) as claimed in one of the preceding claims, **characterized by** the following features:
- the stabilization device (30; 31-38) comprises four stabilization struts (31-38), respective pairs of which do not extend parallel to one another; and
- a first stabilization strut (31-38) and a second stabilization strut (31-38) define a first plane, and a third stabilization strut (31-38) and a fourth stabilization strut (31-38) define a second plane, wherein the first plane and the second plane enclose an angle.

6. The foundation pile (10) as claimed in one of the preceding claims, **characterized in that** the stabilization struts (31-38) are connected to one another.

7. The foundation pile (10) as claimed in one of the preceding claims, **characterized by** the following features:
- the stabilization device (30; 31-38) comprises eight stabilization struts (31-38);
- two stabilization struts (31-38) in each case extend axially offset and in a collinear manner relative to one another, thus forming four stabilization strut pairs which do not extend parallel to one another;
- a first stabilization strut pair and a second stabilization strut pair define a first plane, and a third stabilization strut pair and a fourth stabilization strut pair define a second plane, wherein the first plane encloses an angle with the second plane; and
- the foundation pile (10) furthermore comprises a connecting device (40) for connecting the stabilization struts (31-38), wherein the connecting device (40) has eight receptacles (41) for respectively accepting one end of a stabilization strut (31-38), wherein the axial extents of two receptacles (41) in each case extend parallel to one another.

8. The foundation pile (10) as claimed in one of the preceding claims, **characterized in that** the foundation pile (10) comprises at least two foundation pile segments (20), wherein the longitudinal axes of the respective foundation pile segments (20) extend in a substantially collinear manner relative to one another.

9. The foundation pile (10) as claimed in claim 8, **characterized in that** the two foundation pile segments (20) are connected to one another by means of the stabilization device (30; 31-38, 39_1, 39_2, 39_3).

10. The foundation pile (10) as claimed in claim 8 or 9, **characterized in that** the foundation pile segments (20) are each formed by at least two partial-cylinder segments (24), which are connected to one another by means of the stabilization device (30; 31-38, 39_1, 39_2, 39_3).

11. The foundation pile (10) as claimed in claim 10, **characterized in that** longitudinal edges (21) of mutually adjacent partial-cylinder segments (24) of the foundation pile segment (10) are spaced apart, with the result that the foundation pile (10) has through openings (14) between these longitudinal edges (21) of the partial-cylinder segments (24).

12. The foundation pile (10) as claimed in one of the preceding claims, **characterized in that** the foundation pile (10) comprises fastening devices (50), which are arranged on the inside of the foundation pile (10), wherein the stabilization device (30) is fastened on the fastening devices (50) .

## Revendications

1. Pieu de fondation (10), le pieu de fondation (10) comprenant un dispositif de stabilisation (30 ; 31-38, 39_1, 39_2, 39_3) qui est agencé à l'intérieur du pieu de fondation (10) et qui est relié à au moins deux sections de surface intérieure (11) du pieu de fondation (10), des forces de pression et/ou de traction pouvant être transmises au moyen du dispositif de stabilisation (30 ; 31-38, 39_1, 39_2, 39_3) de sorte que le dispositif de stabilisation (30 ; 31-38, 39_1, 3 9_2, 39_3) s'oppose à une déformation latérale et/ou à une déformation en torsion du pieu de fondation (10), **caractérisé en ce que** le dispositif de stabilisation (30 ; 31-38) comprend au moins une entretoise de stabilisation (31-38) dont les deux extrémités opposées sont reliées à deux sections de surface intérieure (11) du pieu de fondation (10).

2. Pieu de fondation (10) selon la revendication 1, **caractérisé en ce que** le dispositif de stabilisation (30 ; 31-38, 39_1, 39_2, 39_3) comprend un anneau de stabilisation (39_1, 39_2, 39_3) qui est agencé à l'intérieur du pieu de fondation (10) et qui est relié à au moins deux sections de surface intérieure (11) du pieu de fondation (10).

3. Pieu de fondation (10) selon l'une des revendications précédentes, **caractérisé par** les caractéristiques suivantes :
- le dispositif de stabilisation (30 ; 31-38) comprend au moins deux entretoises de stabilisation (31-38) dont les composants d'extension, au moins sur certaines sections, ne s'étendent pas parallèlement les uns aux autres ; et
- les extrémités respectives des entretoises de stabilisation (31-38) sont respectivement reliées à une section de surface intérieure (11) du pieu de fondation (10).

4. Pieu de fondation (10) selon l'une des revendications précédentes, **caractérisé par** les caractéristiques suivantes :
- le dispositif de stabilisation (30 ; 31-38) comprend au moins trois entretoises de stabilisation (31-38) dont les composants d'extension, respectivement par paire, ne s'étendent pas parallèlement les uns aux autres ; et
- les extrémités respectives des entretoises de stabilisation (31-38) sont respectivement reliées à une section de surface intérieure (11) du pieu de fondation (10).

5. Pieu de fondation (10) selon l'une des revendications précédentes, **caractérisé par** les caractéristiques suivantes :
- le dispositif de stabilisation (30 ; 31-38) comprend quatre entretoises de stabilisation (31-38) qui, respectivement par paire, ne s'étendent pas parallèlement les unes aux autres ; et
- une première entretoise de stabilisation (31-38) et une deuxième entretoise de stabilisation (31-38) couvrent un premier plan, et une troisième entretoise de stabilisation (31-38) et une quatrième entretoise de stabilisation (31-38) couvrent un second plan, le premier plan et le second plan formant un angle.

6. Pieu de fondation (10) selon l'une des revendications précédentes, **caractérisé en ce que** les entretoises de stabilisation (31-38) sont reliées entre elles.

7. Pieu de fondation (10) selon l'une des revendications précédentes, **caractérisé par** les caractéristiques suivantes :
- le dispositif de stabilisation (30 ; 31-38) comprend huit entretoises de stabilisation (31-38) ;
- respectivement deux entretoises de stabilisation (31-38) s'étendent de façon axialement décalée et colinéairement l'une à l'autre, de sorte que quatre paires d'entretoises de stabilisation ne s'étendant pas parallèlement les unes aux autres sont formées ;
- une première paire d'entretoises de stabilisation et une deuxième paire d'entretoises de stabilisation couvrent un premier plan, et une troisième paire d'entretoises de stabilisation et une quatrième paire d'entretoises de stabilisation couvrent un second plan, le premier plan et le second plan formant un angle ; et
- le pieu de fondation (10) comprend en outre un dispositif de liaison (40) pour la liaison des entretoises de stabilisation (31-38), le dispositif de liaison (40) comprenant huit réceptacles (41) pour la réception respective d'une extrémité d'une entretoise de stabilisation (31-38), les extensions axiales de deux réceptacles respectifs (41) s'étendant parallèlement l'une à l'autre,

8. Pieu de fondation (10) selon l'une des revendications précédentes, **caractérisé en ce que** le pieu de fondation (10) comprend au moins deux segments de pieu de fondation (20), les axes longitudinaux des segments respectifs de pieu de fondation (20) s'étendant sensiblement colinéairement.

9. Pieu de fondation (10) selon la revendication 8, **caractérisé en ce que** les deux segments de pieu de fondation (20) sont reliés entre eux au moyen du dispositif de stabilisation (30 ; 31-38, 39_1, 39_2, 39_3).

10. Pieu de fondation (10) selon la revendication 8 ou 9, **caractérisé en ce que** les segments de pieu de fondation (20) sont respectivement formés d'au moins deux segments cylindriques partiels (24), lesquels segments sont reliés entre eux au moyen du dispositif de stabilisation (30 ; 31-38, 39_1, 39_2, 39_3).

11. Pieu de fondation (10) selon la revendication 10, **caractérisé en ce que** les bords longitudinaux (21) de segments cylindriques partiels (24) mutuellement adjacents du segment de pieu de fondation (10) sont espacés les uns des autres de sorte que le pieu de fondation (10) présente des ouvertures de passage (14) entre les bords longitudinaux (21) des segments cylindriques partiels (24).

12. Pieu de fondation (10) selon l'une des revendications précédentes, **caractérisé en ce que** le pieu de fondation (10) comprend des dispositifs de fixation (50) qui sont agencés sur la face intérieure du pieu de fondation (10), le dispositif de stabilisation (30) étant fixé aux dispositifs de fixation (50).
